# EUROPEAN PATENT APPLICATION

(11) **EP 4 343 712 A1**
(43) Date of publication of application: **27.03.2024**
(21) Application number: 22197404.1
(22) Date of filing: 23.09.2022
(51) Int. Cl.: G06V 10/44, G06F 18/25, G06V 10/46, G06V 10/774, G06V 10/80, G06F 18/214

(54) **DEVICE AND METHOD FOR DETERMINING A DATASET FOR TRAINING AND/OR TESTING AN OBJECT DETECTOR**

(71) Applicant: Robert Bosch GmbH, 70442 Stuttgart (DE)
(72) Inventor: Geiger, Andreas, Tübingen (DE); Huang, Haiwen, Tübingen (DE); Zhang, Dan, 71229 Leonberg (DE)

(57) **Abstract**

Computer-implemented method for determining a dataset (T) for training and/or testing an object detector (60) comprising the steps of:
• Determining, from a first input signal (*xᵢ*) and by means of a first model (71, 72, 73), a mid-level cue (*mlc*₁, *mlc*₂, *mlc*₃), wherein the first model (71, 72, 73) is configured for determining a mid-level cue (*mlc*₁, *mlc*₂, *mlc*₃) from an input signal (*xᵢ*);
• Determining, from the determined mid-level cue (*mlc*₁, *mlc*₂*, mlc*₃) and by means of a second model (81, 82, 83), a first output signal (*fo*) characterizing a first object detection, wherein the second model (81, 82, 83) is configured for determining an output signal (*o*₁, *o*₂, *o*₃) characterizing an object detection determined from a mid-level cue (*mlc*₁, *mlc*₂, *mlc*₃);
• Determining the dataset (T), wherein the dataset (T) comprises the first input signal (*xᵢ*) and a corresponding desired output signal (*tᵢ*), wherein the desired output signal (*tᵢ*) characterizes the first output signal (*fo*)*.*

## Description

### Technical field

The invention concerns a method for determining a dataset, a method and device for training an object detector, a method for determining a control signal of an actuator and/or display, a computer program, and a computer-readable storage medium.

### Prior art

Eftekhar et al. "Omnidata: A Scalable Pipeline for Making Multi-Task Mid-Level Vision Datasets from 3D Scans", 2021, https://arxiv.org/abs/2110.04994 discloses embodiments of mid-level cues.

Kim et al. "Learning Open-World Object Proposals without Learning to Classify", 2021, https://arxiv.org/abs/2108.06753 discloses an Object Localization Network (OLN).

Cubuk et al. "AutoAugment: Learning Augmentation Strategies from Data", 2019, https://openaccess.thecvf.com/content_CVPR_2019/papers/Cubuk_AutoAugmen t_Learning_Augmentation_Strategies_From_Data_CVPR_2019_paper.pdf discloses a procedure to automatically search for improved data augmentation policies.

### Technical background

Being able to detect objects is a vital ability for a variety of different applications. Autonomous machines, such as robots or self-driving cars, are dependent on determining objects in their environment in order to determine desirable and/safe actions. Especially when planning a path of movement of the autonomous machine in its environment, object detection is an indispensable necessity to avoid the machine crashing into elements of its environment.

Unfortunately, object detection is a difficult task often times. The most successful object detectors rely on methods from the field of machine learning. They typically work by training statistical models, especially neural networks, for detecting objects in inputs signals provided to the model.

Object detectors based on machine learning models are typically trained in a supervised fashion, that is, they are provided an input signal and a desired output signal characterizing objects to be detected by the machine learning model and the machine learning is then trained to minimize a difference between an output signal determined by the model for the inputs signal and the desired output signal.

This approach, however, requires the machine learning system to derive all its knowledge purely from the supplied input signals, which may be quite hard at times. Typically, object detectors operate on RGB images, which make it hard to detect objects in front of background of a similar color as the objects. Additionally, known object detectors are typically presented with a list of objects from so called "known classes" during training. That is, while an image may contain more objects than indicated by a corresponding annotation, these objects are considered as belonging to the so called "background". This may make it very hard for a classifier to learn to accurately detect objects. For example, if a dataset is designed for detecting cars but not trucks, a machine learning system would be faced with a hard problem as it would have to learn to differentiate.

Advantageously, the method with features of the independent claim 1 allows for determining a dataset with annotations not only comprising known object classes but also object classes that were not included in an original annotation of the dataset. This dataset enables an object detector to better discriminate between actual objects and background as it is not only provided a list of objects of known classes but a much larger variety of objects. The inventors found that the training dataset allows for better, i.e., more accurate object detections made by the object detector. Additionally, the added annotations also allow for a better evaluation of the object detector, i.e., better testing capabilities as it can be discerned better, which objects to object detector does not detect correctly.

### Disclosure of the invention

In a first aspect, the invention concerns a computer-implemented method for determining a dataset for training and/or testing an object detector comprising the steps of:
- Determining, from a first input signal and by means of a first model, a mid-level cue, wherein the first model is configured for determining a mid-level cue from an input signal;
- Determining, from the determined mid-level cue and by means of a second model, a first output signal characterizing a first object detection, wherein the second model is configured for determining an output signal characterizing an object detection determined from a mid-level cue (*mclc*₁*,mlc*₂,*mlc*₃);
- Determining the dataset, wherein the dataset comprises the first input signal and a corresponding desired output signal, wherein the desired output signal characterizes the first output signal.

The method may especially be understood as a method for determining a training dataset that is configured for usage in training and/or testing of an object detector, especially machine learning-based object detectors.

Training may especially be supervised. That is a dataset may be configured for training if it comprises an input signal (later in this document also referred to as training input signal), wherein the input signal is assigned a desired output signal (also sometimes referred to as annotation), which characterizes a desired output that an object detector shall put out if it is presented with the input signal.

Advantageously, the method allows for creating an annotation (i.e., the desired output signal) for the first input signal or augmentation an existing annotation by objects comprised the first output signal. This way, the first input signal is enriched with a better annotation, which leads to a training dataset that is more suitable for training as it enables an object detector to decide between objects and background more accurately.

Alternatively, the dataset may be used for testing an object detector. Due to the created or augmented annotation of the first input signal, testing the object detector results in a better approximation of the generalization capabilities of the object detector and hence in a better insight into the true detection accuracy of the object detector. Likewise, the created or enhanced annotation can be used to determine which objects are harder to detect for the object detector more accurately thus enabling a deeper understanding of the object detector. Such understanding may subsequently be used to improve the object detector, i.e., by supplying more training data of hard-to-detect objects.

An object detector may be understood as taking an input signal as input and providing an output signal characterizing a detection of objects characterized by the input signal. An object detector may especially be or may especially comprise a machine learning system, e.g., a neural network. The object detector may also comprise pre-processing and/or post processing measures for determining inputs for the machine learning system from an input signal of the object detector or determine object detections from an output of the machine learning system respectively. For example, the object detector may comprise a neural network for determining rectangular regions in the input signal which the neural network deems to show objects, wherein the rectangular regions enclose respective objects. Such rectangular regions are also known as bounding boxes. Alternatively, an object detector may also be understood as being configured for determining all pixels of an object in the form of an instance segmentation.

In the method, a mid-level cue is determined based on the first input signal. A mid-level clue may be understood as a representation of mid-level information about an input signal. The mid-level information may be with respect to content of the input signal (e.g., edges in an image, surface normals, depth). The term mid-level may be understood here as an intermediate step in solving the actual task at hand, i.e., object detection. By extracting a mid-level cue, some information in the input signal may be discarded (e.g., color when determining a mid-level cue of edges, surface normals, or depth). The inventors found, however, that this reduction of information advantageously leads to the situation that some objects are easier to detect in a mid-level representation of an input signal than in the input signal itself. For example, a green object in front of a green background can be detected easier when detecting the object in a depth image than in an RGB image due to the object standing out from the background in this mid-level cue or mid-level representation. Exemplary embodiments of mid-level cues are disclosed by, e.g., Eftekhar et al.

Determining a mid-level cue based on an input signal may be understood as extracting relevant information with respect to the mid-level cue from the input signal. For example, if the mid-level cue is desired to indicate edge information, common edge-extraction methods may be used to determine the mid-level cue. However, it is also possible to acquire machine learning models, which are capable of determining the mid-level cue based in the input signal by feeding the input signal as input to the machine learning system. Such a machine learning model may either be acquired in an already trained form, e.g., by downloading the model form the internet, or may be trained by providing input signals and corresponding mid-level cures to the machine learning model.

The first model may hence be understood as the previously described machine learning model. However, the first model may also characterize a deterministic function, e.g., a Sobel operator for extracting a mid-level cue of edges from an input signal.

Based on the mid-level cue, the first output signal is determined by means of a second model. This may, again, be understood as feeding the mid-level cue to the second model as input, wherein the second model then determined the first output signal as output. The second model may also be a machine learning model. The second model is configured for object detection based on the mid-level cue. That is, the second model may have been trained to detect objects using a mid-level cue es input. Thus, as the mid-level cue is based on an input signal, the object detection determined for the mid-level cue characterizes an object detection for objects in the input signal used for determining the mid-level cue. Optionally, steps for training the second model may be comprised by the method. Alternatively, it is also possible to acquire the second model in an already trained form, e.g., by downloading it from the internet.

The desired output signal may be understood as corresponding to the first input signal as it characterizes information that is specific for the first input signal.

In preferred embodiments of the method, the second model is configured for open-set object detection. In other words, the second model may not be restricted to detect objects from known classes but is configured to judge objects in input images based on their appearance. The second model may, for example, be or may comprise an Object Localization Network. Advantageously, the second model being configured for open-set object detection allows for supplying even more objects in the annotation of the input signal. The resulting dataset is hence even better to be used for training and/or testing as the amount of annotation, i.e., information, about the input signal is even increased.

In preferred embodiments of the method the desired output signal is determined by merging an initial desired output signal corresponding to the first input signal with the first output signal, wherein the initial desired output signal characterizes an object detection.

In these preferred embodiments, the first input signal may be understood as already being assigned an initial desired output signal, i.e., an initial annotation. The initial annotation may have been determined by a manual labeling of the first input signal and/or by an automatic labelling of the first input signal.

Preferably, multiple different mid-level cues are determined from the first input signal and subsequently used for determining the desired output signal. In other words, determining the first output signal preferably comprises the steps of:
- Determining, from the first input signal and by means of a plurality of first models, a plurality of different types of mid-level cues, wherein a first model from the plurality of first models is configured for determining a mid-level cue from an input signal;
- Determining, for each mid-level cue from the plurality of mid-level cues and by means of a second model from a plurality of second models, a second output signal characterizing a second object detection, thereby determining a plurality of second output signals, wherein each second model from the plurality of second models is configured for determining an output signal characterizing an object detection based on a mid-level cue;
- Determining the first output signal by merging second output signals from the plurality of second output signals.

The output signal of a second model may be used directly as first output signal in case only a single mid-level cue is determined. Alternatively, in the case of determining a plurality of mid-level cues, the respective output signals determined from the second models may be merged to determine the first output signal. The merging operation may be configured to include information from the different first output signals and remove overlapping object detections. For example, all object detections characterized by the second output signals may be combined and a non-maximum suppression operation may then be run on the combined second output signals.

Advantageously, the inventors found that including information obtained from a plurality of different mid-level cues increases a quality of the desired output signal with respect to correct position and extent of objects in the first input signal even further.

The proposed method may be repeated for a plurality of first input signals. In other word, the dataset preferably comprises a plurality of first input signals and corresponding desired output signals, wherein the desired output signals are obtained based on the method presented above.

Advantageously, increasing a size of the dataset allows it to be even better suited for training and/or testing an object detector.

In another aspect, the invention concerns a computer-implemented method for training and/or testing an object detector comprising the steps of:
- Determining a dataset according to the method for determining a dataset presented above;
- Training and/or testing the object detector based on the determined dataset.
   +

Advantageously, the improved dataset results in an increased accuracy of the object detector with respect to localizing objects and determining their extent in an input signal.

The method for training may preferably comprise regularizing the training. Preferably, regularization the training comprises augmenting the input signal or the input signals by means of an augmentation operation, preferably AutoAugment.

Preferably, an object detection characterized by the desired output signal is assigned an objectness score, wherein training comprises optimizing a training objective, wherein the first input signal is weighted in the training objective according to the objectness score.

The desired output signal may characterize object detections from the initial desired output signal (e.g., an annotation or ground truth of the first input signal). Each of these object detections may be assigned a probability of being correct. An object detection can be considered as correct if it correctly indicates a presence and/or location of an object in the input signal. For example, an object detection may be given in the form of a bounding box. If the bounding box overlaps sufficiently with an object in the input signal, then the object detection may be considered correct.

In general, an object detection determined from a second model is a prediction about an object in the input signal and cannot automatically be verified. Hence, embodiments relaying the objectness score as disclosed above propose to configure the second model or the second models such that they provide a value characterizing an objectness score. An objectness score of an object detection can be understood as a measure of probability or likelihood that an object actually exists in the input signal at the location proposed by the object detection.

That is, the second model or the second models provide a self-assessment with respect to the object detection. The objectness score is sometimes also referred to in the art as simply objectness.

The inventors found that using the objectness score in weighting the respective object detections in the desired output signal allows weighting down object detections which are unreliable and giving more weight to reliable object detections. In turn, this increases the accuracy of the object detector.

In the previously presented embodiments, the object detector may preferably be configured for open-set object detection. Open-set object detection may also be referred to as open-world object detection.

In any of the previous methods, the first input signal may be obtained from a sensor. The step of obtaining the input signal may also be part of a respective method. The sensor may, for example, be a camera, a LIDAR sensor, a radar, an ultrasonic sensor, a thermal camera.

Embodiments of the invention will be discussed with reference to the following figures in more detail. The figures show:
- Figure 1: schematically a method for determining a desired output signal for an input signal;
- Figure 2: a training system for training an object detector based on the input signal and the desired output signal;
- Figure 3: a control system comprising the object detector and controlling an actuator in its environment;
- Figure 4: the control system controlling an at least partially autonomous robot;
- Figure 5: the control system controlling a manufacturing machine.

### Description of the embodiments

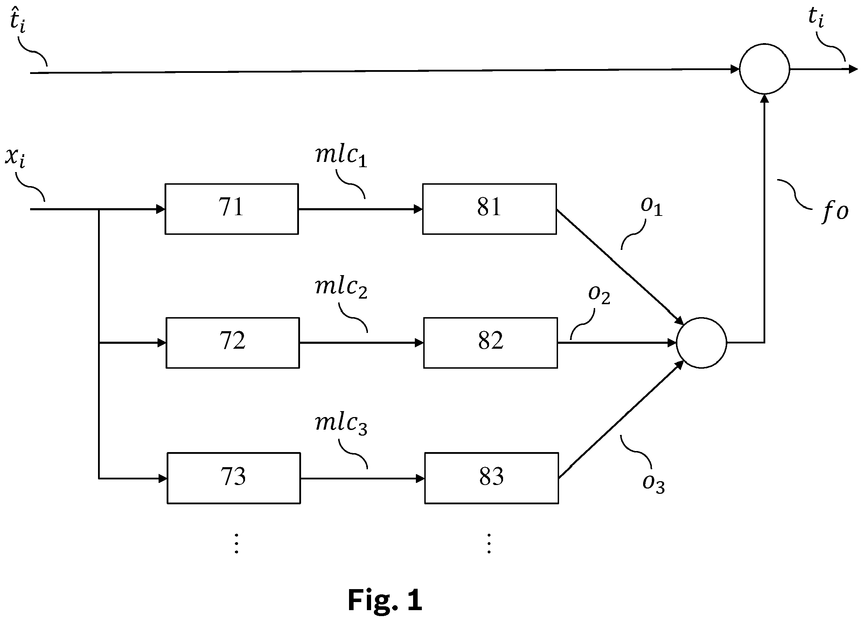

Figure 1 schematically shows a method for determining a desired output signal (tᵢ) for a first input signal (*xᵢ*). The first input signal (*xᵢ*) may preferably be a signal obtained from a sensor, e.g., a camera.

The first input signal (*xᵢ*) is provided to at least one but preferably a plurality of first models (71, 72, 73). Each first model is configured to determine a mid-level cue (*mlc*₁,*mlc*₂*,mlc*₃) based on the first input signal (*xᵢ*). In the embodiment, the first models (71, 72, 73) are machine learning models, e.g., neural networks, which are each configured to determine a mid-level cue based on an input signal. In the embodiment, the different first models (71, 72, 73) are configured to determine different types of mid-level cues, e.g., edges, surface normals, and depth. In other embodiments, it is also possible that at least two of the first models (71, 72, 73) are configured for determining a same type of mid-level cue.

The mid-level cues (*mlc*₁,*mlc*₂*,mlc*₃) are forwarded to respective second models (81, 82, 83), wherein the second models (81, 82, 83) are each configured for determining a second output signal (*o*₁,*o*_{2,}*o*₃), wherein the respective second output signals (*o*₁,*o*₂,*o*₃) characterize an object detection with respect to the first input signal (*xᵢ*). The second models (81, 82, 83) may hence be understood as object detectors, wherein the input to the respective object detector is not an input signal but a mid-level cue extracted from an input signal. However, by virtue of the connection of mid-level cue to an input signal, the object detections are connected to the input signal.

The second models (81, 82, 83) may especially be models from the field of machine learning, especially neural networks. Even more preferably, each second model (81, 82, 83) may be given or may comprise an Object Localization Network (abbr. OLN) for determining objects to be provided in a second output signal (*o*₁,*o*₂,*o*₃).

The second output signals (*o₁,o₂,o₃*) are then merged into a first output signal *(fo),* i.e., an output signal characterizing a combined information about objects from the first input signal (*xᵢ*) and obtained by means of the second output signals (*o*₁,*o*₂,*o*₃). Merging may preferably be achieved by means of non-maximum suppression with respect to all object detections comprised in the second output signals (*o*₁,*o*₂,*o*₃). The objects comprised in a second output signal (*o₁,o₂,o₃*) are preferably characterized in terms of bounding boxes enclosing objects displayed by the first input signal (*xᵢ*).

The first output signal (*fo*) may be used directly as desired output signal (*tᵢ*). Preferably, the first input signal (*xᵢ*) is already assigned an initial desired output signal (*t̂*ᵢ), which the first output signal *(fo)* can then be merged with to determine the desired output signal (*tᵢ*). The initial desired output signal (*t̂ᵢ*) may, for example, be obtained based on a manual labelling of the first input signal (*xᵢ*). Alternatively or additionally, automated labelling methods may be used for determining the initial desired output signal (*t̂ᵢ*).

The first input signal (*xᵢ*) and the desired output signal (*tᵢ*) may then be added to an existing dataset. Alternatively, the method may be repeated for a plurality of different first input signals (*xᵢ*) in order to determine a plurality of pairs of first input signal (*xᵢ*) and desired output signal (tᵢ) wherein the plurality of pairs may then be provided as dataset, e.g., as training dataset, validation dataset, or as testing dataset.

The described embodiment is preferred. However, it is also possible that instead of a plurality of mid-level cues and a plurality of second models only a single id-level cue is determined, for which a single second model determines a second output signal. The second output signal may then be used directly as first output signal as no merging is necessary in this scenario.

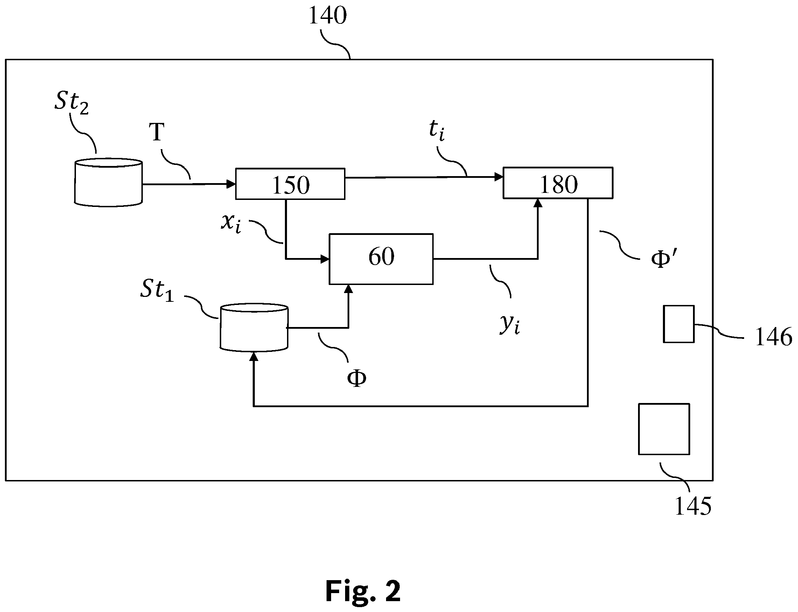

Figure 2 shows an embodiment of a training system (140) for training an object detector (60) of a training data set (T), determined according to an embodiment as described previously.

For training, a training data unit (150) accesses a computer-implemented database (St₂), the database (St₂) providing the training data set (T). The training data unit (150) determines from the training data set (T) preferably randomly at least one input signal (*xᵢ*) and the desired output signal (tᵢ) corresponding to the input signal (*xᵢ*) and transmits the input signal (*xᵢ*) to the object detector (60). The object detector (60) determines an output signal (yᵢ) based on the input signal (*xᵢ*), wherein the output signal characterizes an object detection.

The desired output signal (*tᵢ*) and the determined output signal (*yᵢ*) are transmitted to a modification unit (180).

Based on the desired output signal (*tᵢ*) and the determined output signal (*yᵢ*), the modification unit (180) then determines new parameters (Φ') for the machine learning system (60). For this purpose, the modification unit (180) compares the desired output signal (*tᵢ*) and the determined output signal (*yᵢ*) using a loss function. The loss function determines a first loss value that characterizes how far the determined output signal (*yᵢ*) deviates from the desired output signal (*tᵢ*). In the given embodiment, a negative log-likehood function is used as the loss function. Other loss functions are also conceivable in alternative embodiments.

Furthermore, it is conceivable that the determined output signal (*yᵢ*) and the desired output signal (*tᵢ*) each comprise a plurality of sub-signals, for example in the form of tensors, wherein a sub-signal of the desired output signal (*tᵢ*) corresponds to a sub-signal of the determined output signal (*yᵢ*). It is conceivable, for example, a first sub-signal characterizes a probability of occurrence of an object with respect to a part of the input signal (*xᵢ*) and a second sub-signal characterizes the exact position of the object. If the determined output signal (*yᵢ*) and the desired output signal (*tᵢ*) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters (Φ') based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters (Φ') determined in a previous iteration are used as parameters (Φ) of the object detector (60).

Furthermore, the training system (140) may comprise at least one processor (145) and at least one machine-readable storage medium (146) containing instructions which, when executed by the processor (145), cause the training system (140) to execute a training method according to one of the aspects of the invention.

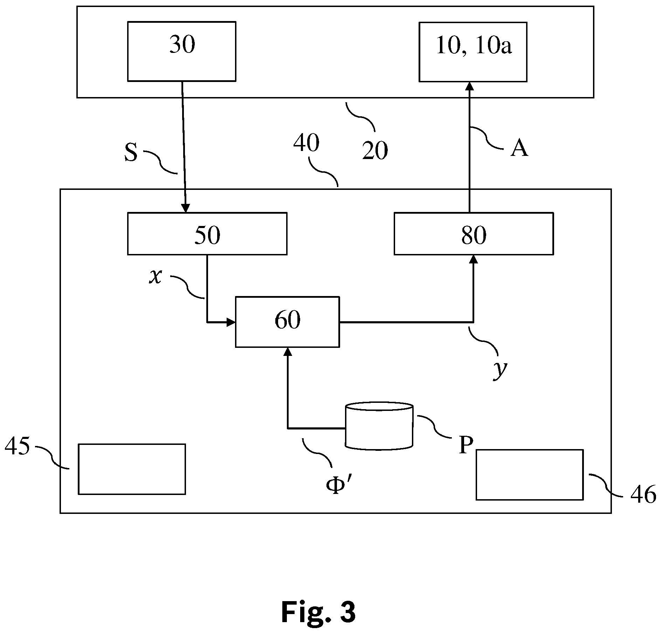

Figure 3 shows an embodiment of a control system (40) configured for determining a control signal (A) for controlling an actuator (10) in its environment (20), wherein the control signal (A) is determined based on an output signal (y) obtained from the object detector (60). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (*x*)*.* Alternatively, in case of no receiving unit (50), each sensor signal (S) may directly be taken as an input signal (*x*)*.* The input signal (*x*) may, for example, be given as an excerpt from the sensor signal (S). Alternatively, the sensor signal (S) may be processed to yield the input signal (*x*). In other words, the input signal (*x*) is provided in accordance with the sensor signal (S).

The input signal (*x*) is then passed on to the object detector (60).

The object detector (60) is parametrized by parameters (Φ), which are stored in and provided by a parameter storage (*St*₁).

The object detector (60) determines an output signal (*y*) from the input signals (*x*)*.* The output signal (*y*) is transmitted to an optional conversion unit (80), which converts the output signal (*y*) into the control signals (A). The control signals (A) are then transmitted to the actuator (10) for controlling the actuator (10) accordingly. Alternatively, the output signal (y) may directly be taken as control signal (A).

The actuator (10) receives control signals (A), is controlled accordingly, and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

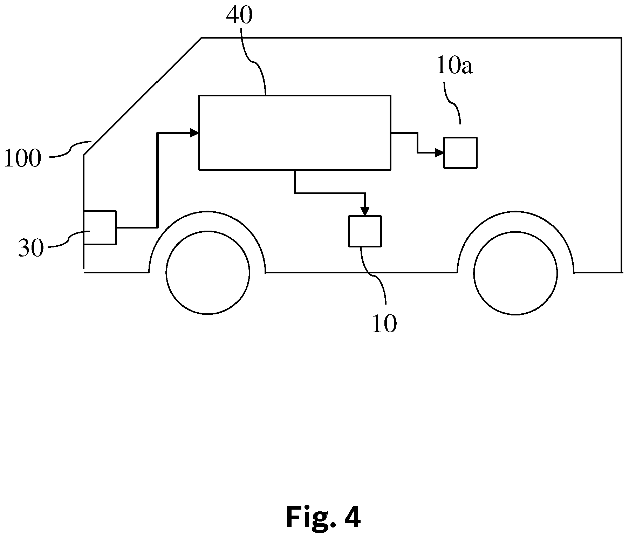

Figure 4 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100).

The object detector (60) may be configured to detect objects, e.g., other road participants, in the vicinity of the at least partially autonomous robot based on the input image (x). The output signal (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the object detector (60) deems them most likely to be, e.g., pedestrians or trees, and the control signal (A) may be determined depending on the classification.

Alternatively or additionally, the control signal (A) may also be used to control the display (10a), e.g., for displaying the objects detected by the object detector (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving, or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like, e.g., a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

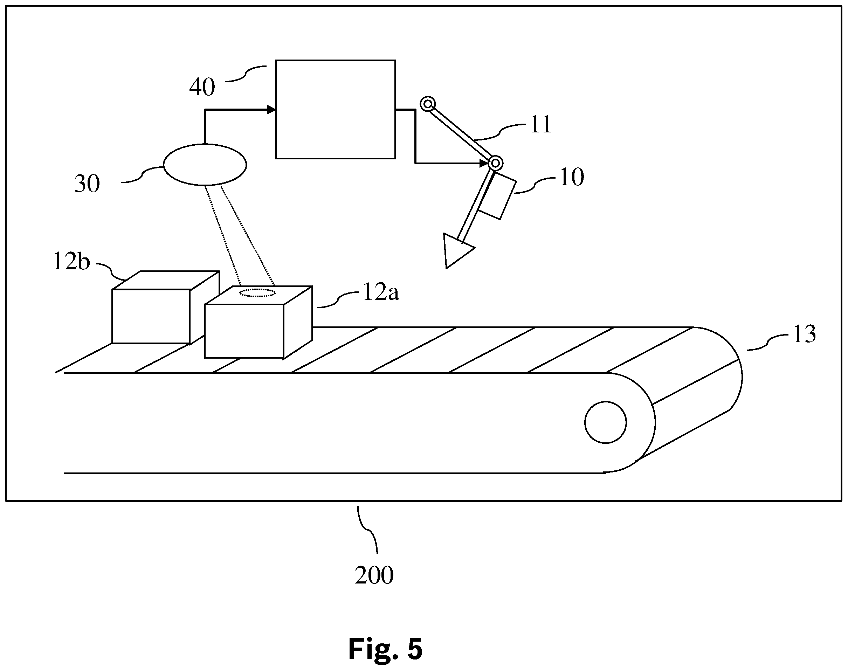

Figure 5 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12).

The object detector (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. It may also be envisioned that the object detector (60) classifies for a detected manufactured product (12), whether the manufactured product (12) is broken and/or exhibits a defect. The actuator (10) may then be controlled as to remove the manufactured product (12) from the transportation device.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It may also be understood that elements of the plurality can be accessed by their index.

## Claims

1. Computer-implemented method for determining a dataset (T) for training and/or testing an object detector (60) comprising the steps of:
• Determining, from a first input signal (*xᵢ*) and by means of a first model (71, 72, 73), a mid-level cue (*mlc*₁,*mlc*₂,*mlc*₃), wherein the first model (71, 72, 73) is configured for determining a mid-level cue (*mlc*₁,*mlc*₂*,mlc*₃) from an input signal (*xᵢ*);
• Determining, from the determined mid-level cue (*mlc*₁,*mlc*₂*,mlc*₃) and by means of a second model (81, 82, 83), a first output signal *(fo)* characterizing a first object detection, wherein the second model (81, 82, 83) is configured for determining an output signal (*o₁,o₂,o₃*) characterizing an object detection determined from a mid-level cue (*mlc*₁*,mlc*₂*,mlc*₃);
• Determining the dataset (T), wherein the dataset (T) comprises the first input signal (*xᵢ*) and a corresponding desired output signal (*tᵢ*), wherein the desired output signal (*tᵢ*) characterizes the first output signal *(fo).*

2. Method according to claim 1, wherein the second model (81, 82, 83) is configured for open-set object detection.

3. Method according to claim 1 or 2, wherein the desired output signal (*t*ᵢ*)* is determined by merging an initial desired output signal (*t̂ᵢ*) corresponding to the first input signal (*xᵢ*) with the first output signal *(fo),* wherein the initial desired output signal (tᵢ) characterizes an object detection.

4. Method according to any one of the claims 1 to 3, wherein determining the first output signal *(fo)* comprises the steps of:
• Determining, from the first input signal (*xᵢ*) and by means of a plurality of first models (71, 72, 73), a plurality of mid-level cues (*mlc*₁,*mlc*₂,*mlc*₃), wherein a first model (71, 72, 73) from the plurality of first models (71, 72, 73) is configured for determining a mid-level cue (*mlc*₁,*mlc*₂*,mlc*₃) from an input signal (*xᵢ*);
• Determining, for each mid-level cue (*mlc*₁,*mlc*₂*,mlc*₃) from the plurality of mid-level cues (*mlc*₁,*mlc*₂,*mlc*₃) and by means of a second model (81, 82, 83) from a plurality of second models (81, 82, 83), a second output signal (*o₁,o₂,o₃*) characterizing a second object detection, thereby determining a plurality of second output signals (*o*₁,*o*₂,*o*₃), wherein each second model (81, 82, 83) from the plurality of second models (81, 82, 83) is configured for determining an output signal (*o₁,o₂,o₃*) characterizing an object detection based on a mid-level cue (*mlc*₁*,mlc*₂,*mlc*₃);
• Determining the first output signal by merging second output signals from the plurality of second output signals.

5. Method according to any one of the claims 1 to 4, wherein the dataset comprises a plurality of first input signals and corresponding desired output signals.

6. Computer-implemented method for training and/or testing an object detector comprising the steps of:
• Determining a dataset according to any one of the claims 1 to 5;
• Training and/or testing the object detector based on the determined dataset.

7. Method according to claim 6, wherein the method for training comprises regularizing the training.

8. Method according to claim 6 or 7, wherein an object detection **characterized by** the desired output signal is assigned an objectness score, wherein training comprises optimizing a training objective, wherein the first input signal is weighted in the training objective according to the objectness score.

9. Computer-implemented method for determining a control signal (A) of an actuator (10) and/or a display comprising the steps of:
• Determining an output signal (*y*) based on an input signal (*x*) and by means of an object detector, wherein the object detector (60) has been trained with a method according to any one of the claims 6 to 8;
• Determining the control signal (A) based on the output signal (*y*)

10. Method according to any one of the claims 1 to 9, wherein the object detector is configured for open-set object detection.

11. Method according to any one of the previous claims, wherein the first input signal is obtained from a sensor (30).

12. Training system (140), which is configured to carry out the training method according to any one of the claims 6 to 8.

13. Control system (40), which is configured to carry out the method according to claim 9.

14. Computer program that is configured to cause a computer to carry out the method according to any one of the claims 1 to 11 with all of its steps if the computer program is carried out by a processor (45, 145).

15. Machine-readable storage medium (46, 146) on which the computer program according to claim 14 is stored.
